# EUROPÄISCHE PATENTSCHRIFT

(11) **EP 2 419 331 B1**
(45) Veröffentlichungstag und Bekanntmachung des Hinweises auf die Patenterteilung: **15.02.2017**
(21) Anmeldenummer: 10713674.9
(22) Anmeldetag: 15.04.2010
(51) Int. Cl.: B64C 3/34, B64D 37/32, B64D 37/00

(54) **VORRICHTUNG ZUR VERHINDERUNG DES DURCHTRITTS VON GASEN UND/ODER FLUIDEN AUS EINEM FLÜGELKASTEN IN EINE RUMPFZELLE EINES FLUGZEUGS**
DEVICE FOR PREVENTING THE PASSAGE OF GASES AND/OR FLUIDS FROM A WINGBOX INTO A FUSELAGE OF AN AIRCRAFT
DISPOSITIF POUR EMPÊCHER LE PASSAGE DE GAZ ET/OU DE FLUIDES PROVENANT D'UN CAISSON D'AILE DANS UNE CELLULE DE FUSELAGE D'UN AVION

(30) Priorität: 16.04.2009 DE 102009017644; 16.04.2009 US 169733 P
(43) Veröffentlichungstag der Anmeldung: 22.02.2012
(73) Patentinhaber: Airbus Operations GmbH, 21129 Hamburg (DE)
(72) Erfinder: BOGIATZIS, Christos, 28816 Stuhr (DE)
(74) Vertreter: Kopf Westenberger Wachenhausen Patentanwälte PartG mbB
(86) Internationale Anmeldenummer: PCT/EP2010/054983
(87) Internationale Veröffentlichungsnummer: WO 2010/119105

(56) Entgegenhaltungen:
- EP-A1- 2 239 195
- EP-A2- 2 048 079
- DE-A1- 3 826 464
- US-A- 2 508 906
- US-A- 2 691 134
- US-A- 2 779 702

## Beschreibung

Die Erfindung betrifft eine Vorrichtung zur Verhinderung des Durchtritts von aus einem Flügelkasten eines Flugzeugs stammenden Gasen und/oder Fluiden in eine Rumpfzelle des Flugzeugs.

Bei modernen Flugzeugen werden die Tanks bevorzugt in die Tragflächen integriert. Hierdurch ergeben sich eine Platzersparnis im Bereich der Rumpfzelle bei einer gleichzeitigen Gewichtsreduzierung und eine vorteilhafte Masseverteilung.

Insbesondere bei Flugzeugen in der so genannten Hochdeckerbauweise ergibt sich jedoch das Problem, dass im Falle einer auch nur geringfügigen Undichtigkeit des Tragflächentanks Kraftstoff und/oder flüchtige Substanzen in die darunter befindliche Rumpfzelle gelangen. Dennoch wurden in der Vergangenheit nicht alle Flugzeugtypen gegen diese Eventualität mit Schutzvorrichtungen ausgestattet, was vor dem Hintergrund zunehmend strengerer Sicherheits- und Umweltvorschriften im modernen Flugzeugbau nicht mehr tragbar ist.

Dieselbe Problematik stellt sich - wenn auch in abgeschwächter Form - im Fall von Passagier- und Frachtflugzeugen in der bekannten Tiefdeckerbauweise, bei denen ein unkontrolliertes Austreten von zumindest gasförmigen Substanzen aus den unterhalb der Rumpfzelle befindlichen Tragflächen und dem Flügelkasten mit den jeweils darin vorgesehenen Tragflächentanks in die Passagierkabine unterbunden werden muss, um insbesondere gesundheitliche Beeinträchtigungen zu vermeiden und den Auflagen der Luftfahrtbehörden zu genügen.

Die aus dem Stand der Technik bekannten Lösungen sind jedoch entweder konstruktiv zu aufwändig und zu starr ausgestaltet und führen demzufolge zu einer oftmals nicht hinnehmbaren Gewichtserhöhung und/oder die Abdichtungswirkung ist über die zu erwartende Lebensdauer bzw. die vorgegebenen Wartungszyklen des Flugzeugs hinweg nicht mit ausreichender Sicherheit gewährleistet.

US 4393997 offenbart eine Vorrichtung zur Verhinderung des Durchtritts von aus einem Flügelkasten eines Flugzeugs stammenden Gasen und/oder Fluiden in eine Rumpfzelle des Flugzeugs gemäß dem Oberbegriff des Anspruchs 1.

Aufgabe der Erfindung ist es, eine sichere aber zugleich auch leichte sowie einfach zu montierende Barriere gegen den Durchtritt von Flüssigkeiten und/oder Gasen aus einem Tragflächentank in die Rumpfzellenstruktur eines Flugzeugs zu schaffen, die darüber hinaus eine ausreichende mechanische Festigkeit gegenüber auftretenden Druckdifferenzen aufweist.

Diese Aufgabe wird durch eine Vorrichtung mit den Merkmalen des Patentanspruchs 1 gelöst.

Dadurch, dass eine Einfassung im Bereich einer Unterseite oder einer Oberseite des Flügelkastens positioniert ist und mindestens ein Flächengebilde im Bereich der umlaufenden Einfassung angeordnet ist, ergibt sich ein minimales Gewicht der Barriere bei einer zugleich optimalen Abdichtungswirkung gegenüber Flüssigkeiten und/oder Gasen, die aus einem Treibstofftank im Bereich des Flügelkastens in einem Fehlerfall, beispielsweise in der Form des Versagens einer Tankdichtung, austreten können. Daneben erlaubt das Flächengebilde eine einfache und schnelle Montage und verfügt ferner im Betrieb über eine ausreichende Flexibilität, um etwaige Bewegungen zwischen einer Tragfläche bzw. dem Flügelkasten und den darin befindlichen Tragflächentanks sowie der darunter befindlichen Rumpfzelle im Flugbetrieb ausgleichen zu können. Ferner lässt sich die Vorrichtung durch eine Veränderung der Geometrie des eingesetzten Flächengebildes leicht an unterschiedlichste Flugzeugtypen adaptieren. Etwaige Deformationsbewegungen des elastischen Flächengebildes aufgrund von einwirkenden Druckdifferenzen werden durch den Flügelkasten limitiert.

Bevorzugt ist das Flächengebilde einstückig ausgebildet. Gegebenenfalls kann das Flächengebilde auch durch das Vernähen von mindestens zwei bahnförmigen Teil-Flächengebilden mittels eines geeigneten Nähfadens hergestellt werden, wobei die dann zur Sicherstellung der notwendigen Dichtigkeit erforderlichen Überlappungsnähte herstellungsseitig mit einer Epichlorohydrin-Elastomermasse bzw. mit einer Gummimasse abgedichtet werden.

Nach Maßgabe einer vorteilhaften Weiterbildung der Vorrichtung ist vorgesehen, dass das Flächengebilde mit einer Armierung zur Verstärkung, insbesondere mit einem thermoplastischen Gewebe, einem Gestrick, einem Gelege oder einer beliebigen Kombination hiervon gebildet ist, die zumindest bereichsweise mit einer Epichlorohydrin-Elastomermasse imprägniert ist.

Hierdurch ist eine hermetische Abdichtungswirkung der Vorrichtung gegenüber Flüssigkeiten und/oder flüchtigen Stoffen, insbesondere Gasen, bei einer zugleich hervorragenden Elastizität zum Toleranzausgleich und gegenüber Relativbewegungen zwischen dem Flügelkasten und der Rumpfzelle gegeben. Zur thermoplastischen Armierung kommt bevorzugt ein Aramid®-Gewebe zum Einsatz, das mit einer Epichlorohydrin-Gummimasse imprägniert bzw. durchtränkt ist. Alternativ können auch Glasfasern, Kohlefasern, Naturfasern oder Metallfasern als Armierungsgewebe Verwendung finden.

Darüber hinaus verfügt das eingesetzte Elastomer bzw. das Gummimaterial über antistatische Eigenschaften, so dass eine Entzündung explosiver Gasgemische im Bereich der Vorrichtung nahezu ausgeschlossen ist. Derartige elektrostatische Aufladungen können zum Beispiel durch austretende Treibstoffe, Reibungselektrizität und dergleichen entstehen. Um eine ausreichende Ableitung statischer Elektrizität zu gewährleisten, weist das für die Vorrichtung zum Einsatz kommende Flächengebilde einen definierten Oberflächenwiderstand pro Flächeneinheit zwischen 200 kΩ und 500 MΩ auf. Ein Durchgangswiderstand zwischen zwei überlappend verklebten Flächengebilden beträgt bei einer Überlappung von 75 mm ca. 2.8 MΩ und im Fall einer Überlappung von 50 mm etwa 270 kΩ.

Eine weitere vorteilhafte Ausgestaltung der Vorrichtung sieht vor, dass das Flächengebilde mittels der Einfassung mit dem Flügelkasten verbunden ist, wobei die Einfassung mit mindestens einem Halteprofil und mindestens einem Gegenhalteprofil zum randseitigen Einklemmen des Flächengebildes gebildet ist.

Hierdurch ist eine allseitig umlaufende, feste und vor allem hermetisch dichtschließende Aufnahme der Vorrichtung beispielsweise an einer Unterseite des Flügelkastens eines Flugzeugs gegeben. Um die Anbindung des Flächengebildes zu ermöglichen, sind in den Randbereich des Flächengebildes, in das Halteprofil sowie in das Gegenhalteprofil eine Vielzahl von jeweils zueinander korrespondierenden Bohrungen bzw. Löchern eingebracht. Die Bohrungen sind vorzugsweise gleichmäßig zueinander beabstandet angeordnet. Zur Befestigung des Flächengebildes werden beispielsweise Schraubbolzen und/oder Niete durch die Löcher in den genannten Komponenten gesteckt und festgezogen. Die Abdichtung erfolgt allein durch das Einklemmen des Flächengebildes zwischen dem Halteprofil und dem Gegenhalteprofil.

In einer bevorzugten Ausführungsvariante kann das an der Unterseite des Flügelkastens befestigte Halteprofil eine Querschnittsgeometrie aufweisen, die angenähert zwei unter einem Winkel von etwa 45° aneinander anstoßende Schenkel aufweist, wobei an einen vom Flächengebilde wegweisenden Schenkel eine halbkreisförmige Fortsetzung anschließt. Das Gegenhalteprofil dagegen verfügt über eine einfache, angenähert u-förmige Querschnittsgeometrie.

Eine Weiterbildung der Vorrichtung sieht vor, dass innerhalb der Einfassung im Bereich mindestens eines Anbindungspunktes des Flügelkastens jeweils mindestens ein Stehbolzen zur außerrandseitigen Anbindung des Flächengebildes angeordnet ist.

Hierdurch wird eine weitere Befestigungsmöglichkeit am Flügelkasten geschaffen. Bevorzugt sind außerrandseitig mindestens 36 Anbindungspunkte innerhalb des Flächengebildes vorgesehen, die in einem näherungsweise gleichmäßigen Raster über das Flächengebilde hinweg verteilt angeordnet sind.

Eine weitere vorteilhafte Ausgestaltung sieht vor, dass das Flächengebilde mindestens einen Verstärkungsbereich zur Anbindung an jeweils einen Stehbolzen aufweist und in den Verstärkungsbereich eine metallische Hülse mit einem Langloch integriert, insbesondere eingeklebt und/oder einvulkanisiert, ist.

Hierdurch werden eine gleichmäßige Krafteinleitung und das Ausreißen des Flächengebildes im Bereich der Anbindungspunkte verhindert.

Eine Weiterentwicklung sieht vor, dass der mindestens eine Stehbolzen mit dem Flügelkasten verbunden, insbesondere vernietet, verbolzt und/oder verklebt, ist und der mindestens eine Stehbolzen einen Gewindeabschnitt aufweist, wobei auf den Gewindeabschnitt eine Mutter zur kraftschlüssigen Verbindung zwischen der Hülse und einem Sockel des Stehbolzens aufbringbar ist.

Durch die feste Verbindung des Stehbolzens mit dem Flügelkasten und die Befestigung der Hülse auf dem Stehbolzen mittels der Mutter, ist ein sicherer Sitz des Flächengebildes unterhalb des Flügelkastens gegeben. Der Begriff des "Verbolzens" definiert in diesem Kontext eine geschraubte Verbindung.

Eine weitere vorteilhafte Ausgestaltung sieht vor, dass zwischen der Hülse und der Mutter eine Exzentervieleckscheibe vorgesehen ist, wobei die Exzentervieleckscheibe in eine Längsnut in einem Hülsenflansch zumindest bereichsweise formschlüssig einbringbar ist, derart, dass durch ein Verdrehen der Exzentervieleckscheibe um einen Winkelbetrag kleiner oder gleich 90° eine definiert gestufte Ausrichtbarkeit des Flächengebildes parallel zu einer Rumpfzellenlängsachse gegeben ist.

Durch das Verdrehen der Exzentervieleckscheibe kann auf einfache Weise ein Toleranzausgleich erfolgen.

Nach Maßgabe einer Weiterentwicklung weist das Flächengebilde mindestens eine in etwa parallel zu einer Rumpfzellenlängsachse eingebrachte Welle auf, um eine zusätzliche Ausrichtbarkeit des Flächengebildes quer zur Rumpfzellenlängsachse in Relation zum Flügelkasten zu ermöglichen.

Infolge der Wellen ist zum einen eine Toleranzausgleichsmöglichkeit quer zur Rumpfzellenlängsachse gegeben und zum anderen werden die Sammlung und die Ableitung von Flüssigkeiten, die vom Flächengebilde aufgefangen wurden, verbessert.

Nach Maßgabe einer weiteren Fortbildung ist vorgesehen, dass im Bereich mindestens eines Wellentals der mindestens einen Welle mindestens ein Drainageanschluss mit einer daran angeschlossenen Schlauchleitung zur Ableitung von etwaig aus dem Flügelkasten austretenden Fluiden und/oder Gasen vorgesehen ist.

Durch diese Anordnung des Drainageanschlusses ist eine effiziente Ableitung von aufgefangenen Fluiden bzw. Flüssigkeiten gegeben.

Nach Maßgabe einer weiteren Ausgestaltung ist vorgesehen, dass der mindestens eine Verstärkungsbereich des Flächengebildes bevorzugt im Bereich eines Wellenberges angeordnet ist.

Infolge dieser Anordnung der Verstärkungsbereiche wird die Ausbildung von Wellen innerhalb des Flächengebildes unterstützt.

In der Zeichnung zeigt:
- **Fig. 1**: eine perspektivische Ansicht auf eine Unterseite eines noch nicht mittels der Vorrichtung abgedeckten Flügelkastens eines Flugzeugs,
- **Fig. 2**: eine vereinfachte Querschnittsdarstellung durch die Vorrichtung in einem Randbereich,
- **Fig. 3**: eine detaillierte Schnittdarstellung durch den Stehbolzen nach Fig. 2,
- **Fig. 4**: eine Draufsicht auf den Stehbolzen nach Fig. 3 mit aufgesetzter Exzentervieleckscheibe,
- **Fig. 5**: eine isometrische Darstellung eines Stehbolzens nach Fig. 4 mit einer Mutter,
- **Fig. 6**: eine perspektivische Ansicht eines Flächengebildes mit einer Vielzahl von Verstärkungsbereichen und Drainageanschlüssen, und
- **Fig. 7**: eine perspektivische Ansicht auf die Vorrichtung von unten mit Drainageanschlüssen und einer Vielzahl von daran angeschlossenen Schläuchen.

In der Zeichnung weisen dieselben konstruktiven Elemente jeweils dieselbe Bezugsziffer auf.

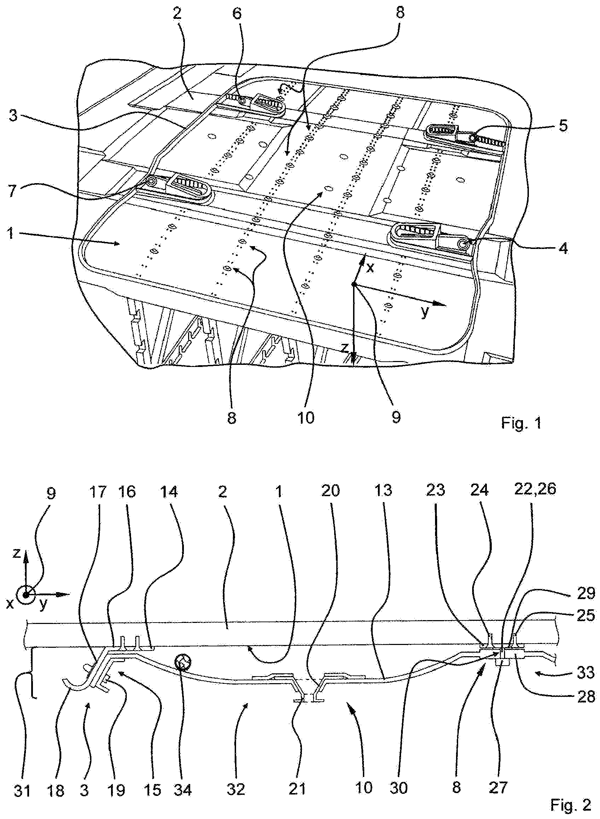

Die Fig. 1 illustriert eine perspektivische Ansicht auf eine Unterseite eines noch nicht mittels der Vorrichtung bedeckten Flügelkastens eines Flugzeugs.

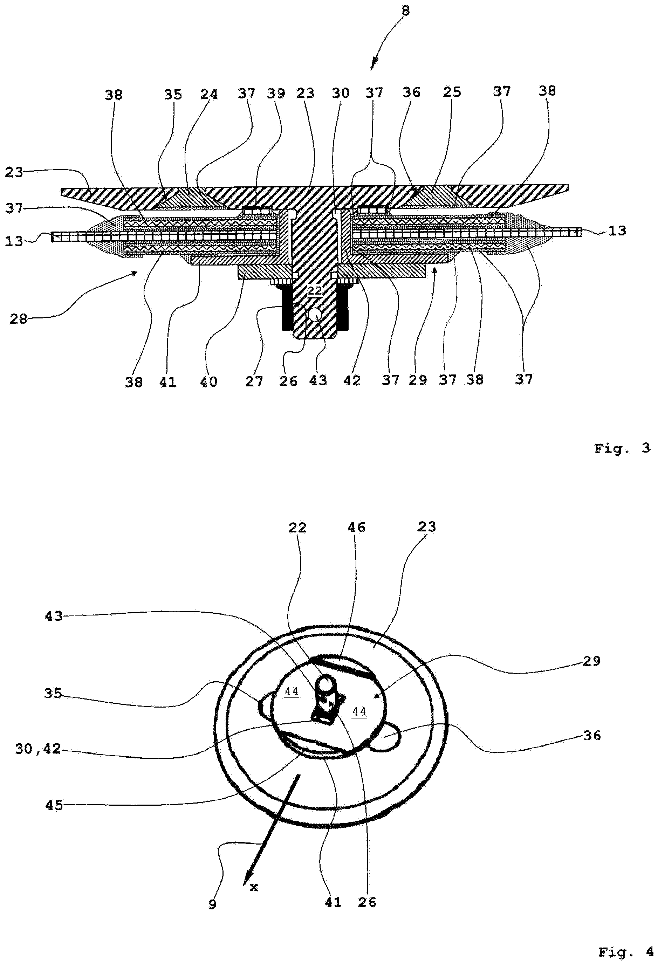

Im Bereich einer Unterseite 1 eines oberhalb einer nicht dargestellten Rumpfzelle angeordneten Flügelkastens 2 eines Flugzeugs in Hochdeckerbauweise ist eine umlaufende Einfassung 3 angeordnet. Die Einfassung 3 dient zur randseitigen Anbindung des in Fig. 1 nicht dargestellten Flächengebildes der Vorrichtung an die Unterseite 1 des Flügelkastens 2. Im Bereich der Einfassung 3 befinden sich vier Beschläge 4 bis 7, die zur Anbindung weiterer, nicht eingezeichneter Komponenten dienen. Die Einfassung 3 mit einer angenähert rechteckförmigen geometrischen Gestalt verfügt - in Abhängigkeit vom Flugzeugtyp - über eine Flächenerstreckung von in der Regel mehreren Quadratmetern und entspricht in etwa einer Kontur einer gleichfalls in Fig. 1 nicht sichtbaren Ausnehmung, die im Fall der Hochdeckerbauweise des Flugzeugs im Rahmen der Anbindung einer Tragfläche in einem oberen Bereich der Flugzeugrumpfzelle notwendig ist. Innerhalb der Einfassung 3 sind im gezeigten Ausführungsbeispiel der Fig. 3 insgesamt 36 über eine von der Einfassung 3 aufgespannte Fläche hinweg in einem im Wesentlichen gleichmäßigen Raster verteilt angeordnete Anbindungspunkte vorgesehen, von denen ein Anbindungspunkt repräsentativ für alle weiteren die Bezugsziffer 8 trägt. Die Anbindungspunkte dienen zur zusätzlichen, außerrandseitigen Befestigung des Flächengebildes der Vorrichtung an der Unterseite 1 des Flügelkastens 2.

Die Orientierung im Raum wird in allen Figuren durch ein Koordinatensystem 9 verdeutlicht, dessen x-Achse parallel zu einer Rumpfzellenlängsachse des Flugzeugs verläuft. Die Orientierung der x-Achse weist hierbei entgegen einer Flugrichtung des Flugzeugs. Die z-Achse des Koordinatensystems 9 ist senkrecht vom Erdboden weggerichtet und die y-Achse des Koordinatensystems 9 verläuft quer zur der x-Achse bzw. der Rumpfzellenlängsachse des Flugzeugs.

Ferner ist eine Vielzahl von Drainagepunkten vorgesehen, von denen lediglich ein Drainagepunkt mit der Bezugsziffer 10 versehen ist. Die Drainagepunkte dienen zur kontrollierten Ableitung von flüssigen und/oder gasförmigen Substanzen über in das Flächengebilde eingelassene Drainageanschlüsse, die vom Flächengebilde der Vorrichtung aufgefangen wurden. Hierbei sind die Drainagepunkte derart über die von der Einfassung 3 begrenzte Fläche hinweg verteilt positioniert, dass unabhängig von etwaigen Relativbewegungen zwischen der Rumpfzelle und dem Flügelkasten 2, die im Flugbetrieb und bei verschiedenen Bodenbetriebszuständen des Flugzeugs auftreten, stets eine vollständige, kontrollierte und gleichmäßige Ableitung der von der Vorrichtung aufgefangenen Flüssigkeiten gegeben ist.

Die Fig. 2 veranschaulicht eine vereinfachte Schnittdarstellung der Vorrichtung.

Eine erfindungsgemäß ausgestaltete Vorrichtung umfasst unter anderem ein Flächengebilde 13, das mittels der Einfassung 3 randseitig unterseitig am Flügelkasten 2 wellenförmig aufgespannt und befestigt ist. Das Flächengebilde 13 ist bevorzugt mit einem Gewebe aus Aramid-Fasern gebildet, das zur Herstellung der vollständigen Fluid- und Druckdichtigkeit mit einer gummiartigen Epichlorohydrin-Elastomermasse imprägniert ist und das darüber hinaus über die notwendige mechanische Belastbarkeit verfügt.

Die Einfassung 3 zum randseitigen Halten des Flächengebildes 13 umfasst unter anderem ein Halteprofil 14 sowie ein Gegenhalteprofil 15. Das Gegenhalteprofil 15 verfügt idealerweise über eine näherungsweise u-förmige Querschnittsgeometrie, während die Querschnittsgeometrie des Halteprofils 14 über einen ersten Schenkel 16 verfügt, an den ein zweiter Schenkel 17 unter einem Winkel von etwa 45° anschließt. Der zweite Schenkel 17 geht in einen halbkreisförmigen Endabschnitt 18 über. Der erste Schenkel 16 des Halteprofils 14 ist mit zwei nicht mit einer Bezugsziffer versehenen Nieten mit dem Flügelkasten 2 verbunden. Die Niete sind mit einem geeigneten Dichtmittel hermetisch abgedichtet. Das Flächengebilde 13 ist randseitig fest zwischen dem zweiten Schenkel des Halteprofils 14 und dem Gegenhalteprofil 15 der Einfassung 3 eingespannt. Das Einspannen des Flächengebildes 13 erfolgt durch ein Verbindungselement 19, bei dem es sich beispielsweise um eine Bolzenverbindung oder eine Nietverbindung handelt. Alternativ ist auch eine Klebeverbindung möglich. Um die gezeigte Bolzenverbindung zu ermöglichen, sind in das Halteprofil 14, das Gegenhalteprofil 15 sowie in den Randbereich des Flächengebildes 13 eine Vielzahl von Bohrungen bzw. Löchern eingebracht, die vorzugsweise gleichmäßig zueinander beabstandet angeordnet sind. Die notwendige Abdichtung erfolgt im Bereich der Einfassung 3 durch das zwischen dem Halte- und dem Gegenhalteprofil 14,15 fest eingequetschte Flächengebilde 13. Sowohl des Halte- als auch das Gegenhalteprofil 14,15 können mit aneinander gereihten Profilabschnitten gebildet sein.

In das Flächengebilde 13 ist im Zeichnungsausschnitt der Fig. 2 ein Drainageanschluss 20 im Bereich des Drainagepunktes 10 integriert, der zur Ableitung von insbesondere Flüssigkeiten und/oder Gasen dient, die vom Flächengebilde 13 aufgefangen bzw. von diesem vom Innenraum der Flugzeugrumpfzelle zurückgehalten werden. Die Integration des Drainageanschlusses 20 in das Flächengebilde 13 erfolgt herstellerseitig beispielsweise durch Einkleben bzw. Einvulkanisieren.

Um den Anschluss eines in Fig. 2 nicht dargestellten Schlauches bzw. einer Schlauchleitung eines komplexen Schlauchleitungssystems zu ermöglichen, verfügt der näherungsweise trichterförmige Drainageanschluss 20 im Bereich eines unteren Endabschnittes über einen Flansch 21 mit nicht näher dargestellten Dichtmitteln. Mittels des Flansches 21 kann eine mit dem Drainageanschluss 20 zu verbindende Schlauchleitung leicht durch Schraubbolzen und/oder andere, gegebenenfalls zu Wartungszwecken leicht wieder lösbare, Verbindungsmechanismen mit diesem verbunden werden. Bevorzugt sind im Bereich des Drainageanschlusses 20 nicht dargestellte Verstärkungselemente, beispielsweise kreisringförmige Scheiben aus einem faserverstärkten Epoxidharzmaterial oder dergleichen in und/oder auf das Flächengebilde 13 geklebt bzw. einvulkanisiert.

Zusätzlich zur randseitigen Befestigung ist das Flächengebilde 13 in dem Anbindungspunkt 8 außerrandseitig mit der Unterseite 1 des Flügelkastens 2 verbunden. Diese Befestigung erfolgt mittels eines Stehbolzens 22 mit einem kreisrunden Sockel 23. Der Sockel 23 ist mit mindestens zwei Verbindungselementen 24,25, beispielsweise in der Form von Nieten und/oder Bolzen, mit dem Flügelkasten 2 verbunden. Die Verbindungselemente 24,25 sind erforderlichenfalls gegenüber dem Flügelkasten 2 abgedichtet. Dies kann beispielsweise durch leichtes Ansenken der Verbindungselemente 24,25 und anschließendes Auffüllen der hierdurch gebildeten Vertiefung mit beispielsweise Epichlorohydrin-Gummimasse erfolgen. Der Stehbolzen 22 verfügt weiterhin in einem Endbereich über einen Gewindeabschnitt 26 auf den eine Mutter 27 befestigbar ist. Ein im Flächengebilde 13 vorgesehener, angenähert kreisringförmiger Verstärkungsbereich 28 mit einer einvulkanisierten Hülse 29 stellt einen integralen Bestandteil des Flächengebildes 13 dar. Die Hülse 29 verfügt über ein Langloch 30, so dass eine Toleranzausgleichsmöglichkeit parallel zur x-Achse des Koordinatensystems 9 gegeben ist. Durch das Aufstecken der Hülse 29 auf den in diesem Bereich nicht mit einem Gewinde versehenen Stehbolzen 22 und das Anziehen der Mutter 27 auf dem Gewindeabschnitt 26 wird eine kraftschlüssige Verbindung geschaffen.

Ferner weist das Flächengebilde 13 eine Welle 31 mit einer geringen Amplitudenhöhe auf. Im Bereich eines Wellentals 32 und damit im tiefsten Punkt befindet sich der Drainageanschluss 20, um eine sichere Ableitung der vom Flächengebilde 13 zurückgehaltenen Flüssigkeiten und/oder flüchtigen Substanzen zu gewährleisten. Ein Wellenberg 33 der Welle 31 bildet sich hingegen im Bereich des Stehbolzens 22 und liegt damit im Bereich des Anbindungspunktes 8 des Flügelkastens 2. Aufgrund der gewellten Struktur des Flächengebildes 13 können zusätzlich Toleranzen und/oder Eigenbewegungen des Flügelkastens 2 sowie Toleranzabweichungen des daran befestigten Stehbolzens 22 parallel zur y-Achse des Koordinatensystems 9 ausgeglichen werden. Neben dem gezeigten Wellental 32 weist das Flächengebilde eine Vielzahl von weiteren, hierzu parallel beabstandet verlaufenden Wellentälern auf.

Exemplarisch ist ein auf dem Flächengebilde 13 aufliegender Flüssigkeitstropfen 34 dargestellt, der in Richtung des Drainageanschlusses 20 abgeleitet wird.

Die Fig. 3 zeigt eine detaillierte Schnittdarstellung durch den Stehbolzen nach Fig. 2.

Der Sockel 23 des Stehbolzens 22 verfügt über zwei Senkbohrungen 35,36 zur Aufnahme der Verbindungselemente 24,25. Die hermetische Abdichtung der Senkbohrungen 35 und 36 erfolgt nach dem Setzen der Verbindungselemente 24,25 durch das bündige Auftragen eines geeigneten Dichtmittels 37. Bei diesem handelt es sich bevorzugt um eine Epichlorohydrin-Gummimasse. Das Flächengebilde 13 weist im Bereich des Anbindungspunktes 8 einen umlaufenden Verstärkungsbereich 28 auf, in den die Hülse 29 integriert, insbesondere unter Verwendung des Dichtmittels 37 einvulkanisiert ist. In die Hülse 29 ist das durchgehende Langloch 30 mit einer angenähert ovalen Querschnittsgeometrie eingebracht. Der Verstärkungsbereich 28 ist mit zwei beidseitig auf das Flächengebilde aufgebrachten, kreisringförmigen Verstärkungsflanschen 38 gebildet, die jeweils beidseitig mit einem - in Fig. 3 der besseren Übersicht halber nicht mit einer Bezugsziffer jedoch mit punktierten Linien angedeuteten - Klebemittel, wie zum Beispiel mit Permabond^{®} 737 oder dergleichen mit dem Flächengebilde 13 verklebt und zusätzlich mit dem Dichtmittel 37 allseitig einvulkanisiert sind. Die in das Flächengebilde 13 integrierten Verstärkungsflansche 38 sind mit einem faserverstärkten Epoxidharzmaterial gebildet. Deren Faserverstärkung kann beispielsweise mit Glasfasern, mit Kohlefasern oder mit anderen geeigneten Verstärkungsfasern aufgebaut sein. Ferner verfügt der Verstärkungsbereich 28 über eine ebenfalls kreisringförmige, aufvulkanisierte Aufdickung 39, die in Richtung des Sockels 23 des Stehbolzens 22 weist und die beim Montagevorgang zur Erhöhung der Abdichtungswirkung zusammengedrückt wird. Die Aufdickung 39 ist gleichfalls mit dem Dichtmittel 37 gebildet.

Zum Anpressen des Verstärkungsbereichs 28 an den Sockel 23 ist eine Exzentervieleckscheibe 40 vorgesehen, die eine in Bezug zu einer Längsachse des Stehbolzens 22 außermittig angeordnete, nicht bezeichnete Exzenterbohrung aufweist. Die Exzentervieleckscheibe 40 wird nicht auf den Stehbolzen aufgeschraubt, sondern lediglich auf diesen zur Positionierung aufgesteckt bzw. aufgeschoben. Die Exzentervieleckscheibe 40 wird mittels der Mutter 27, die auf den Gewindeabschnitt 26 des Stehbolzens 22 aufschraubbar ist, gegen einen Hülsenflansch 41 der in das Flächengebilde einvulkanisierten Hülse 29 gepresst, wodurch ein Hülsenkörper 42 mit einer Querschnittsgeometrie, die einem ovalen Kreisring entspricht, kraftschlüssig mit dem Sockel 23 des Stehbolzens 22 verbunden wird. Hierbei wird zugleich die Aufdickung 39 parallel zur Längsachse des Stehbolzens 22 zusammengedrückt, wodurch die Abdichtungswirkung im Anbindungspunkt 8 optimiert wird.

In den endseitigen Gewindeabschnitt 26 des Stehbolzens 22 ist ferner eine durchgehende Sicherungsbohrung 43 eingebracht. Diese dient zur Aufnahme eines nicht dargestellten Sicherungsmittels, zum Beispiel eines Splintes oder eines Sicherungsstiftes, um ein unbeabsichtigtes Lösen der Mutter 27 vom Gewindeabschnitt 26 zu verhindern.

Sowohl der Stehbolzen 22 einschließlich des Sockels 23 als auch die Hülse 29 und die Exzentervieleckscheibe 40 sind mit einem metallischen Material, insbesondere mit einer Edelstahllegierung oder mit einer Titanlegierung, gebildet. Hierbei ist die Hülse 29 ein integraler Bestandteil des Flächengebildes.

Die Fig. 4 illustriert eine isometrische Ansicht des Stehbolzens mit Sockel und aufgesteckter Hülse, wobei die Hülse ohne das anvulkanisierte Flächengebilde darstellt ist.

Der Sockel 23 mit beiden Senkbohrungen 35,36 ist im Wesentlichen kreisrund ausgebildet und weist randseitig eine nicht bezeichnete Fase von bis zu 45° auf. Mittig auf dem Sockel 23 sowie senkrecht hierzu befindet sich der Stehbolzen 22 mit dem Gewindeabschnitt 26, in dem sich die Sicherungsbohrung 43 befindet. Auf den Stehbolzen 22 ist die Hülse 29 aufgesetzt. In den Hülsenflansch 41 ist eine Längsnut 44 eingebracht, die beidseitig von jeweils einer kreisabschnittförmigen Flanke 45,46 begrenzt ist. Sowohl der Hülsenflansch 41 als auch der Hülsenkörper 42 sind von dem Langloch 30 durchsetzt, wodurch die Verschiebbarkeit der Hülse 29 - und damit auch des Flächengebildes 13 - parallel zur x-Achse des Koordinatensystems 9 gegeben ist. Zwischen den Flanken 45,46 ist die hier nicht dargestellte Exzentervieleckscheibe 40 zumindest bereichsweise formschlüssig aufgenommen.

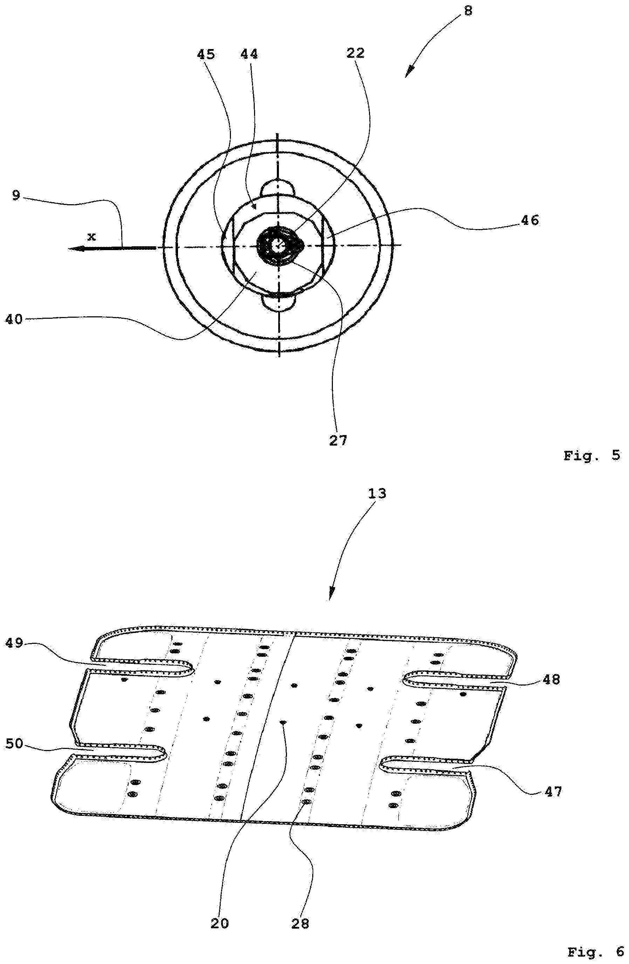

In der Fig. 5 ist eine Draufsicht auf den Stehbolzen nach Maßgabe von Fig. 4, jedoch mit aufgesetzter Exzentervieleckscheibe sowie aufgeschraubter Mutter skizziert.

Die im gezeigten Ausführungsbeispiel insgesamt zwölf Seiten bzw. Kanten unterschiedlicher Länge aufweisende Exzentervieleckscheibe 40 ist in Bezug zum Stehbolzen 22 exzentrisch gelagert, wodurch sich infolge des Versetzens der Exzentervieleckscheibe 40 um jeweils 30° innerhalb der Längsnut 44 zwischen den Flanken 45,46 jeweils parallel zur x-Achse des Koordinatensystems 9 eine Toleranzausgleichsmöglichkeit von beispielsweise 0,5 mm, 1,0 mm, 1,5 mm, 2,0 mm sowie 2,5 mm ergibt.

Im Ergebnis kann das Flächengebilde somit um die genannten Längenbeträge in Relation zum Flügelkasten bzw. zum daran befestigten Stehbolzen 22 parallel zur x-Achse des Koordinatensystems 9 verschoben bzw. justiert werden, wodurch bei der Montage der Vorrichtung fertigungsbedingte Maßabweichungen und dergleichen im Bereich des Flügelkastens kompensierbar sind. Mittels der Mutter 27 wird die Exzentervieleckscheibe 40 final auf dem Stehbolzen 22 festgesetzt und damit im Ergebnis das Flächengebilde im Anbindungspunkt 10 in seiner vorgesehenen, ausjustierten Lage fixiert.

Die Fig. 6 zeigt eine perspektivische Ansicht von schräg oben auf das Flächengebilde.

Das einstückig ausgeführte Flächengebilde 13 verfügt randseitig über eine Vielzahl von, der besseren zeichnerischen Übersicht halber nicht einzeln bezeichneten, jedoch mit kleinen Punkten dargestellte Bohrungen bzw. Löcher, um eine hermetisch dichte, randseitige Befestigung mittels der Einfassung an den Flügelkasten zu erreichen. Um eine hermetisch dichtschließende sowie druckdichte Anbindung der Beschläge (vgl. insb. Fig. 1) zu ermöglichen, weist das Flächengebilde 13 vier angenähert rechteckförmige Ausnehmungen 47 bis 50 auf.

Die Anbindung des Flächengebildes 13 an die Unterseite des Flügelkastens 2 erfolgt entsprechend der in Fig. 2 gezeigten Ausführungsform mit Halteprofilen und Gegenhalteprofilen, die in ihrer Gesamtheit die Einfassung bilden. Darüber hinaus verfügt das angenähert rechteckförmige Flächengebilde 13 über 36 Verstärkungsbereiche zur außerrandseitigen Anbindung an den Flügelkasten mittels der Stehbolzen in den Anbindungspunkten des Flügelkastens 2, von denen lediglich der Verstärkungsbereich 28 repräsentativ für alle übrigen mit einer Bezugsziffer versehen ist. Der konstruktive Aufbau der Verstärkungsbereiche folgt den im Rahmen der Beschreibung der Fig. 2 bereits gemachten Ausführungen.

Weiterhin sind im gezeigten Ausführungsbeispiel des Flächengebildes 13 insgesamt acht Drainageanschlüsse, von denen der Drainageanschluss 20 stellvertretend für alle übrigen mit einer Bezugsziffer versehen ist, eingelassen bzw. einvulkanisiert oder eingeklebt.

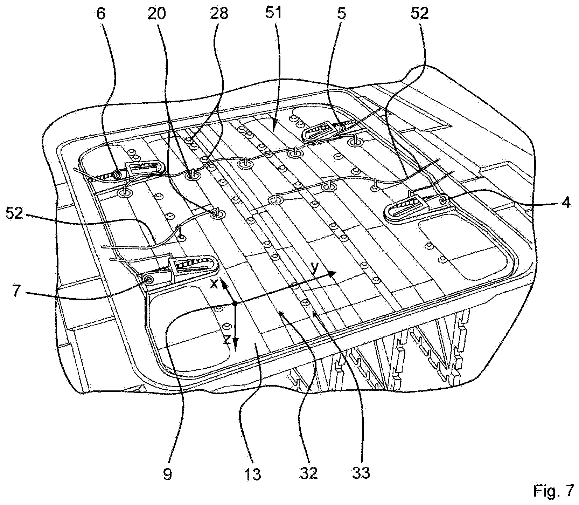

Sämtliche Drainageanschlüsse sind über ein Schlauchleitungssystem (vgl. Fig. 7), das mit einer Vielzahl von Schläuchen bzw. Schlauchleitungen gebildet ist, zur Zusammenführung von durch das Flächengebilde 13 zurückgehaltenen bzw. aufgefangenen Flüssigkeiten und/oder flüchtigen bzw. gasförmigen Substanzen untereinander verbunden. Über das Schlauchleitungssystem werden die genannten Stoffe in die Umgebung des Flugzeugs abgeleitet. Die Schlauchleitungen der Drainageanschlüsse können über Knotenpunkte in der Form von T-Stücken in mindestens eine Sammelleitung zusammengeführt werden. Die mindestens eine Sammelleitung ist dann mit mindestens einem, in den Figuren nicht dargestellten, Auslass im Bereich einer Unterseite der Rumpfzelle des Flugzeugs verbunden. Alternativ kann auch jeder Drainageanschluss individuell mittels einer eigenen Schlauchleitung mit jeweils einem Auslass verbunden sein, um insbesondere die Verstopfungsgefahr im Bereich der Knotenpunkte zu minimieren.

Die Anordnung der Drainageanschlüsse erfolgt hierbei vorzugsweise jeweils in den tiefsten Punkten des Flächengebildes 13, das heißt im Bereich der Wellentäler des eine Vielzahl von Wellen aufweisenden Flächengebildes (vgl. insb. Fig. 2), wobei die Schlauchleitungen mit einem ausreichenden, gleichmäßigen Gefälle verlegt sind, um das vollständige Ablaufen der Flüssigkeiten aus den Schlauchleitungen sicherzustellen.

Die Fig. 7 illustriert in einer weiteren perspektivischen Ansicht das Flächengebilde in einer Ansicht von schräg unten.

Der Drainageanschluss 20 ist, wie alle übrigen Drainageanschlüsse im Bereich eines Wellentals 32 des Flächengebildes 13 angeordnet, während der Verstärkungsbereich 28 - wie alle weiteren Anbindungsbereiche auch - auf einem Wellenberg 33 angeordnet ist. Die Scheitellinien bzw. die Basislinien der Wellenstruktur des Flächengebildes 13 verlaufen, wie der Fig. 7 entnehmbar ist, jeweils parallel zur x-Achse des Koordinatensystems 9. Wie bereits im Rahmen der Beschreibung der Fig. 6 angedeutet, sind die Drainageanschlüsse über ein Schlauchleitungssystem 51 miteinander verbunden, wobei dieses aus einer Vielzahl von einzelnen Schlauchleitungen, von denen eine Schlauchleitung 52 repräsentativ für alle übrigen mit einer Bezugsziffer versehen ist, besteht. Die gegebenenfalls unter Bildung von Knotenpunkten mit T-Stücken verbundenen Schlauchleitungen 52 führen die vom Flächengebilde 13 aufgefangenen Flüssigkeiten und/oder flüchtigen Bestandteile zu mindestens einem, im Bereich einer Unterseite der Rumpfzelle befindlichen Auslass, an dem die endgültige Freisetzung der aufgefangenen Substanzen in die Umwelt erfolgt. Die Drainageanschlüsse können jeweils mit einem T-Stück versehen sein, um eine einfache Einbindung in eine Schlauchleitung durch das Auftrennen derselben und das Verbinden der Schlauchleitungsenden mit dem T-Stück zu ermöglichen. Alternativ kann von jedem Drainageanschluss aus eine separate Schlauchleitung zu jeweils einem Auslass geführt werden.

### Bezugszeichenliste

1. Unterseite (Flügelkasten)
2. Flügelkasten
3. Einfassung
4. Beschlag
5. Beschlag
6. Beschlag
7. Beschlag
8. Anbindungspunkt (Unterseite Flügelkasten)
9. Koordinatensystem
10. Drainagepunkt (Unterseite Flügelkasten)
13. Flächengebilde
14. Halteprofil
15. Gegenhalteprofil
16. erster Schenkel
17. zweiter Schenkel
18. halbkreisförmiger Endabschnitt
19. Verbindungselement
20. Drainageanschluss
21. Flansch (Drainageanschluss)
22. Stehbolzen
23. Sockel (Stehbolzen)
24. Verbindungselement
25. Verbindungselement
26. Gewindeabschnitt
27. Mutter
28. Verstärkungsbereich (Flächengebilde)
29. Hülse
30. Langloch (Hülse)
31. Welle (Flächengebilde)
32. Wellental (Flächengebilde)
33. Wellenberg (Flächengebilde)
34. Flüssigkeitstropfen
35. Senkbohrung 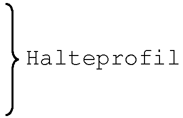
36. Senkbohrung
37. Dichtmittel
38. Verstärkungsflansch (Verstärkungsbereich Flächengebilde)
39. Aufdickung (Verstärkungsbereich)
40. Exzentervieleckscheibe
41. Hülsenflansch
42. Hülsenkörper
43. Sicherungsbohrung (Gewindeabschnitt Stehbolzen)
44. Längsnut
45. Flanke Hülse
46. Flanke
47. Ausnehmung
48. Ausnehmung
49. Ausnehmung
50. Ausnehmung
51. Schlauchleitungssystem
52. Schlauchleitung

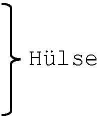

## Patentansprüche

1. Vorrichtung zur Verhinderung des Durchtritts von aus einem Flügelkasten (2) eines Flugzeugs stammenden Gasen und/oder Fluiden in eine Rumpfzelle des Flugzeugs, wobei eine Einfassung (3) im Bereich einer Unterseite (1) oder einer Oberseite des Flügelkastens (2) positioniert ist und mindestens ein Flächengebilde (13) im Bereich der umlaufenden Einfassung (3) angeordnet ist, wobei das Flächengebilde (13) mit einer Armierung gebildet ist, **dadurch gekennzeichnet, dass** die Armierung zumindest bereichsweise mit einem Elastomer imprägniert ist.

2. Vorrichtung nach Patentanspruch 1, **dadurch gekennzeichnet, dass** das Flächengebilde (13) mittels der Einfassung (3) mit dem Flügelkasten (2) verbunden ist, wobei die Einfassung (3) mit mindestens einem Halteprofil (14) und mindestens einem Gegenhalteprofil (15) zum randseitigen Einklemmen des Flächengebildes (13) gebildet ist.

3. Vorrichtung nach einem der Patentansprüche 1 bis 2, **dadurch gekennzeichnet, dass** innerhalb der Einfassung (3) im Bereich mindestens eines Anbindungspunktes (8) des Flügelkastens (2) jeweils mindestens ein Stehbolzen (22) zur außerrandseitigen Anbindung des Flächengebildes (13) angeordnet ist.

4. Vorrichtung nach einem der Patentansprüche 1 bis 3, **dadurch gekennzeichnet, dass** das Flächengebilde (13) mindestens einen Verstärkungsbereich (28) zur Anbindung an jeweils einen Stehbolzen (22) aufweist und in den Verstärkungsbereich (28) eine metallische Hülse (29) mit einem Langloch (30) integriert, insbesondere eingeklebt und/oder einvulkanisiert, ist.

5. Vorrichtung nach Patentanspruch 3 oder 4, **dadurch gekennzeichnet, dass** der mindestens eine Stehbolzen (22) mit dem Flügelkasten (2) verbunden, insbesondere vernietet, verbolzt und/oder verklebt, ist und der mindestens eine Stehbolzen (22) einen Gewindeabschnitt (26) aufweist, wobei auf den Gewindeabschnitt (26) eine Mutter (27) zur kraftschlüssigen Verbindung zwischen der Hülse (29) und einem Sockel (23) des Stehbolzens (22) aufbringbar ist.

6. Vorrichtung nach einem der Patentansprüche 3 bis 5 , **dadurch gekennzeichnet, dass** zwischen der Hülse (29) und der Mutter (27) eine Exzentervieleckscheibe (40) vorgesehen ist, wobei die Exzentervieleckscheibe (40) in eine Längsnut (44) in einem Hülsenflansch (41) zumindest bereichsweise formschlüssig einbringbar ist, derart, dass durch ein Verdrehen der Exzentervieleckscheibe (40) um einen Winkelbetrag kleiner oder gleich 90° eine definiert gestufte Ausrichtbarkeit des Flächengebildes (13) parallel zu einer Rumpfzellenlängsachse gegeben ist.

7. Vorrichtung nach einem der Patentansprüche 1 bis 6, **dadurch gekennzeichnet, dass** das Flächengebilde (13) mindestens eine in etwa parallel zu einer Rumpfzellenlängsachse eingebrachte Welle (31) aufweist, um eine zusätzliche Ausrichtbarkeit des Flächengebildes (13) quer zur Rumpfzellenlängsachse in Relation zum Flügelkasten (2) zu ermöglichen.

8. Vorrichtung nach einem der Patentansprüche 1 bis 7, **dadurch gekennzeichnet, dass** im Bereich mindestens eines Wellentals (32) der mindestens einen Welle (31) mindestens ein Drainageanschluss (20) mit einer daran angeschlossenen Schlauchleitung (52) zur Ableitung von etwaig aus dem Flügelkasten (2) austretenden Fluiden und/oder Gasen vorgesehen ist.

9. Vorrichtung nach einem der Patentansprüche 1 bis 8, **dadurch gekennzeichnet, dass** der mindestens eine Verstärkungsbereich (28) des Flächengebildes (13) bevorzugt im Bereich eines Wellenberges (33) angeordnet ist.

## Claims

1. Device for preventing gases and/or fluids emanating from a wing box (2) of an aircraft from passing to a fuselage cell of the aircraft, wherein a border (3) is positioned in the region of a bottom (1) or a top of the wing box (2) and at least one sheet-like material (13) is arranged in the region of the circumferential border (3), wherein the sheet-like material (13) is formed with a reinforcement, **characterized in that** the reinforcement at least in some regions is impregnated with an elastomer.

2. Device according to claim 1, **characterized in that** the sheet-like material (13) is connected to the wing box (2) by means of the border (3), wherein the border (3) comprises at least one holding profile (14) and at least one counterholding profile (15) for clamping the sheet-like material (13) on the edge.

3. Device according to any one of claims 1 to 2, **characterized in that** within the border (3) in the region of at least one connection point (8) of the wing box (2) in each case at least one stay bolt (22) is arranged for connecting the sheet-like material (13) on the outer edge.

4. Device according to any one of claims 1 to 3, **characterized in that** the sheet-like material (13) comprises at least one reinforcement region (28) for connection in each case to a stay bolt (22), and for a metallic sleeve (29) with an elongated hole (30) is integrated, in particular bonded in and/or vulcanized, in the reinforcement region (28).

5. Device according to claim 3 or 4, **characterized in that** the at least one stay bolt (22) is connected, in particular riveted, bolted and/or bonded, to the wing box (2), and the at least one stay bolt (22) comprises a threaded portion (26), wherein a nut (27) can be placed onto the threaded portion (26) for a force-fit connection between the sleeve (29) and a socket (23) of the stay bolt (22).

6. Device according to any one of claims 3 to 5, **characterized in that** an eccentric polygonal disc (40) is provided between the sleeve (29) and the nut (27), wherein the eccentric polygonal disc (40) can be placed in a longitudinal groove (44) in a sleeve flange (41) at least partly in a form fit manner, such that rotating the eccentric polygonal disc (40) by an angel of less than or equal to 90° results in a defined graduated alignability of the sheet-like material (13) parallel to a longitudinal axis of the fuselage cell.

7. Device according to any one of claims 1 to 6, **characterized in that** the sheet-like material (13) comprises at least one applied waveform (31), placed approximately parallel to a longitudinal axis of the fuselage cell, in order to make it possible to provide additional alignability of the sheet-like material (13) across the longitudinal axis of the fuselage cell in relation to the wing box (2).

8. Device according to any one of claims 1 to 8, **characterized in that** in the region of at least one wave valley (32) of the at least one wave form (31) at least one drainage connection (20) with a hose line (52) connected to it for dissipation of any fluids and/or gases emanating from the wing box (2) is provided.

9. Device according to any one of claims 1 to 8, **characterized in that** the at least one reinforcement region (28) of the sheet-like material (13) is preferably arranged in the region of a wave peak (33).

## Revendications

1. Dispositif pour empêcher le passage de gaz et/ou de fluides provenant d'un caisson d'aile (2) d'un avion dans une cellule de fuselage de l'avion, une bordure (3) étant positionnée dans la zone d'un côté inférieur (1) ou d'un côté supérieur du caisson d'aile (2) et au moins une structure plane (13) étant disposée dans la zone de la bordure (3) périphérique, la structure plane (13) étant formée avec une armature, **caractérisé en ce que** l'armature est imprégnée au moins sur certaines parties avec un élastomère.

2. Dispositif selon la revendication 1, **caractérisé en ce que** la structure plane (13) est reliée au caisson d'aile (2) au moyen de la bordure (3), la bordure (3) étant formée avec au moins un profilé de retenue (14) et au moins un profilé de retenue complémentaire (15) pour le serrage de la structure plane (13) au niveau de son bord.

3. Dispositif selon l'une des revendications 1 et 2, **caractérisé en ce que**, à l'intérieur de la bordure (3) dans la zone d'au moins un point de raccordement (8) du caisson d'aile (2), respectivement au moins un goujon (22) est disposé pour le raccordement de la structure plane (13) autre qu'au niveau de son bord.

4. Dispositif selon l'une des revendications 1 à 3, **caractérisé en ce que** la structure plane (13) comporte au moins une zone de renforcement (28) pour le raccordement à respectivement un goujon (22) et une douille métallique (29) dotée d'un trou oblong (30) est intégrée, en particulier collée et/ou vulcanisée, dans la zone de renforcement (28).

5. Dispositif selon la revendication 3 ou 4, **caractérisé en ce que** l'au moins un goujon (22) est relié, en particulier riveté, boulonné et/ou collé, au caisson d'aile (2), et l'au moins un goujon (22) comporte une partie filetée (26), un écrou (27) pouvant être appliqué sur la partie filetée (26) pour la liaison par adhérence entre la douille (29) et un socle (23) du goujon (22).

6. Dispositif selon l'une des revendications 3 à 5, **caractérisé en ce que**, entre la douille (29) et l'écrou (27), se trouve une plaque polygonale excentrique (40), la plaque polygonale excentrique (40) pouvant être introduite dans une rainure longitudinale (44) d'une bride de douille (41) au moins sur certaines parties par complémentarité de formes, de telle manière que, par une rotation de la plaque polygonale excentrique (40) selon un angle inférieur ou égal à 90°, on obtient une orientabilité échelonnée de manière définie de la structure plane (13) parallèlement à un axe longitudinal de cellule de fuselage.

7. Dispositif selon l'une des revendications 1 à 6, **caractérisé en ce que** la structure plane (13) comporte au moins une ondulation (31) ménagée approximativement parallèlement à un axe longitudinal de cellule de fuselage, afin de permettre une orientabilité supplémentaire de la structure plane (13) par rapport au caisson d'aile (2) transversalement à l'axe longitudinal de cellule de fuselage.

8. Dispositif selon l'une des revendications 1 à 7, **caractérisé en ce que** dans la zone d'au moins un creux d'ondulation (32) de l'au moins une ondulation (31), au moins un raccord de drainage (20) avec une conduite flexible (52) reliée à celui-ci est prévu pour évacuer tout fluide et/ou gaz s'échappant du caisson d'aile (2).

9. Dispositif selon l'une des revendications 1 à 8, **caractérisé en ce que** l'au moins une zone de renforcement (28) de la structure plane (13) est disposée de préférence dans la zone d'une crête d'ondulation (33).
